# EUROPÄISCHE PATENTSCHRIFT

(11) **EP 0 780 548 B1**
(45) Veröffentlichungstag und Bekanntmachung des Hinweises auf die Patenterteilung: **21.03.2001**
(21) Anmeldenummer: 96117645.0
(22) Anmeldetag: 04.11.1996
(51) Int. Cl.: F01M 11/10, F16N 29/04

(54) **Verfahren zur Bestimmung des Ölwechselintervalls einer Brennkraftmaschine sowie Vorrichtung zur Durchführung des Verfahrens**
Method for determining the oil change interval of an internal combustion engine and apparatus for carrying out the method
Procédé pour la détermination de l'intervalle de changement d'huile d'un moteur à combustion interne et dispositif pour sa mise en oeuvre

(30) Priorität: 22.12.1995 DE 19548260
(43) Veröffentlichungstag der Anmeldung: 25.06.1997
(73) Patentinhaber: AUDI AG, 85045 Ingolstadt (DE)
(72) Erfinder: Huber, Karl, Dr., 85072 Eichstätt (DE)

(56) Entgegenhaltungen:
- EP-A- 0 489 261
- US-A- 4 533 900
- US-A- 4 551 703
- US-A- 4 630 027
- US-A- 4 847 768
- US-A- 4 862 393

## Beschreibung

Das Ölwechselintervall einer Brennkraftmaschine wird im allgemeinen von den Herstellern der Brennkraftmaschine oder von den Lieferanten des Schmieröls als Grenzwert vorgegeben. Dieser Grenzwert ist jedoch lediglich ein Schätzwert, der die individuellen Bedingungen, denen die Brennkraftmaschine ausgesetzt ist, nicht berücksichtigt. Daher besteht die Gefahr, daß das Schmieröl zu lange verwendet wird, was die Lebensdauer der Brennkraftmaschine unnötig verringert, oder daß das Schmieröl in zu kurzen Abständen gewechselt wird, was kostspielig ist und zudem die Umwelt belastet. Deshalb ist man neuerdings dazu übergegangen, die tatsächliche Verschmutzung des Schmieröls zu bestimmen und der Bemessung des Ölwechselintervalls zugrunde zu legen.

Die Verschmutzung des Schmieröls einer Brennkraftmaschine kann bekanntlich in Abhängigkeit vom elektrischen Widerstand, dem Differenzdruck zwischen Auf- und Abstromseite des Ölfilters, der Lichtdurchlässigkeit oder der chemischen Zusammensetzung des Öls bestimmt werden. Bei diesen Verfahren ist jedoch problematisch, daß die erforderlichen Meßeinrichtungen sehr aufwendig sind.

Es gibt aber auch Bestrebungen, das Ölwechselintervall einer Brennkraftmaschine in Abhängigkeit von solchen physikalischen Größen zu bestimmen, die ohne aufwendige Meßeinrichtungen von der Brennkraftmaschine abgegriffen werden können.

In der DE-OS 32 28 195 ist zum Beispiel ein Verfahren und eine Vorrichtung zur Überwachung des Zeitpunkts des Schmierölwechsels für einen Kraftfahrzeugmotor beschrieben. Hierzu werden während des Betriebs Motorumdrehungen und Motorlast erfaßt und die entsprechende Rußmenge, die im Schmieröl suspendiert ist, berechnet. Die sich ergebende Rußmenge wird mit einem vorbestimmten Schwellwert verglichen. Beim Überschreiten des Schwellwerts wird ein Alarm erzeugt, der zum Ölwechsel auffordert.

Ferner ist aus der JP 62-93415 eine Warneinrichtung für den Schmierölwechsel eines Fahrzeugs bekannt. Diese Warneinrichtung berechnet den Verschmutzungsgrad des Schmieröls auf der Grundlage von Geschwindigkeit und Öltemperatur. Überschreitet der Verschmutzungsgrad einen vorgegebenen Wert, so wird eine Warnmeldung ausgegeben.

Schließlich ist in der EP-0 231 055 ein Verfahren zum Anzeigen der Erforderlichkeit des Maschinenölwechsels geoffenbart. Dort wird eine bestimmte Anzahl von Motorumdrehungen vorgegeben. Diese Anzahl wird in periodischen Abständen um einen Wert, der sich aus Motorumdrehungen + Öltemperatur x Verschlechterungsfaktor zusammensetzt, vermindert. Die resultierende Anzahl von Motorumdrehungen wird dem Fahrer kontinuierlich angezeigt.

US-A-4 862 393 offenbart die Berechnung des verbleibenden Teils eines Ölwechselintervalls aus Faktoren in Abhängigkeit von der Öltemperatur und dem Kraftstoffverbrauch.

Bislang war der in-situ Einsatz der genannten Verfahren bzw. Vorrichtungen bei Brennkraftmaschinen jedoch meist zu teuer oder zu ungenau. Denn bei diesen bekannten Verfahren und Vorrichtungen ist nachteilig, daß die physikalischen Größen Drehzahl und Geschwindigkeit hinsichtlich der tatsächlichen Verschlechterung des Schmieröls nur bedingt Aussagekraft haben.

Ausgehend von diesem Stand der Technik liegt der Erfindung die Aufgabe zugrunde, ein Verfahren sowie eine Vorrichtung zu konzipieren, um den verbleibenden Teil eines Ölwechselintervalls auf der Grundlage von obligatorisch ausgegebenen Signalen der Brennkraftmaschine zu bestimmen, wobei lediglich solche Signale verwendet werden sollen, die eine hohe Aussagekraft besitzen und daher eine optimale Ausnutzung des Ölwechselintervalls ermöglichen.

Gelöst wird die Aufgabe durch das Verfahren gemäß Anspruch 1 und die Vorrichtung gemäß Anspruch 9. Dadurch, daß die Öltemperatur und der Kraftstoffverbrauch verwendet werden, ist sichergestellt, daß keine aufwendigen Meßeinrichtungen zum Erfassen dieser Signale bereitgestellt werden müssen. Denn ein Öltemperaturfühler ist bei Brennkraftmaschinen serienmäßig vorhanden und der Kraftstoffverbrauch kann bei modernen Brennkraftmaschinen ebenfalls auf einfache Art und Weise aus vorhandenen Signalen übernommen bzw. abgeleitet werden. Zudem liefern Öltemperatur und Kraftstoffverbrauch für die Bestimmung des verbleibenden Teils des Ölwechselintervalls besonders geeignete Ausgangswerte. Denn die Verschlechterung des Öls hängt unmittelbar von den thermischen Gegebenheiten, denen die Brennkraftmaschine ausgesetzt ist sowie von der Art und Menge des verbrauchten Kraftstoffs ab. So können bei der Bewertung des Kraftstoffverbrauchs die charakteristischen Verbrennungsrückstände, die letztlich in das Öl gelangen berücksichtigt werden. Um diese Abhängigkeiten zu berücksichtigen, werden den Wertepaaren aus Öltemperatur und Kraftstoffverbrauch jeweils zwei Verschlechterungsfaktoren zugeordnet. Aus den beiden Verschlechterungsfaktoren kann dann einfach der Verschlechterungsgrad des Öls ermittelt werden. Das individuelle Ölwechselintervall wird daraufhin aus dem mittleren Verschlechterungsgrad des Öls und einer vorgegebenen Kenngröße des maximal erreichbaren Ölwechselintervalls, die je nach Art des verwendeten Öls und/oder je nach Typ der Brennkraftmaschine festgesetzt werden kann, errechnet. Schließlich wird der verbleibende Teil des Ölwechselintervalls bestimmt, indem der bereits geleistete Teil des Ölwechselintervalls vom berechneten individuellen Ölwechselintervall subtrahiert wird. Mittels der Anzeige des verbleibenden Teils des Ölwechselintervalls kann sich der Betreiber der Brennkraftmaschine somit fortwährend informieren, wobei diese Information immer wieder aktualisiert und bis zum fälligen Ölwechsel immer wieder präzisiert wird.

Vorteilhaft werden die Wertepaare aus Öltemperatur und Kraftstoffverbrauch in zeitlichen Abständen von 1 bis 3.5 Sekunden erfaßt. Somit können auch kurzzeitige Belastungsspitzen der Brennkraftmaschine, wie zum Beispiel starke Beschleunigungen bei kaltem Motor, denen relativ hohe Verschlechterungsfaktoren zugeordnet sind, in die Ermittlung des Verschlechterungsgrads des Öls bzw. in die Bestimmung des verbleibenden Ölwechselintervalls einfließen. Natürlich wäre es auch denkbar, daß die Daten in größeren oder kleineren Zeitabständen erfaßt werden, was einerseits bedeuten würde, daß die Bestimmung des Ölwechselintervalls ungenauer wäre und andererseits, daß eine unverhältnismäßig große Anzahl von Wertepaaren zu verarbeiten wäre, ohne daß dabei die Genauigkeit bei der Bestimmung des Ölwechselintervalls wesentlich erhöht werden könnte.

Gemäß einer besonderen Ausführungsform werden die Werte der Öltemperatur in verschiedene Bereiche unterteilt, denen jeweils ein bestimmter Verschlechterungsfaktor A zugeordnet ist, der zwischen 1 und 10 liegt. Dadurch, daß die Öltemperatur verschiedenen Bereichen zugeordnet wird, die jeweils einem vorgegebenen Verschlechterungsfaktor A entsprechen, kann die Menge der zu speichernden Daten gering gehalten werden. Zudem hat es sich als äußerst zweckmäßig erwiesen, wenn die Verschlechterungsfaktoren A von 1 bis 10 reichen, da dies der thermischen Belastung des Öls in guter Weise Rechnung trägt.

Bevorzugt wird der Kraftstoffverbrauch pro Zylinder der Brennkraftmaschine erfaßt. Denn für den Kraftstoffverbrauch pro Zylinder kann zum Beispiel einfach ein Signal vom Motorsteuergerät abgegriffen und umgerechnet werden. Bei der Umrechnung wird das Signal lediglich mit der Motordrehzahl und einem Motorindex multipliziert.

Gemäß einer besonderen Ausführungsform werden die Werte des Kraftstoffverbrauchs in verschiedene Bereiche unterteilt, denen jeweils ein bestimmter Verschlechterungsfaktor B zugeordnet ist, der zwischen 1 und 2 liegt. Die Zuordnung der Werte des Kraftstoffverbrauchs zu verschiedenen Bereichen, die jeweils einem vorgegebenen Verschlechterungsfaktor B entsprechen, bewirkt, daß die Menge der zu speichernden Daten reduziert werden kann.

Vorteilhaft wird das individuelle Ölwechselintervall als Quotient aus der Kenngröße und dem mittleren Verschlechterungsgrad des Öls errechnet. Dabei werden das Ölwechselintervall und die Kenngröße entweder in Zeit- oder Wegeinheit angegeben.

Die Vorrichtung zur Bestimmung und Anzeige des verbleibenden Teils eines Ölwechselintervalls einer Brennkraftmaschine umfaßt Einrichtungen zum Erfassen von Öltemperatur und Kraftstoffverbrauch als Wertepaare sowie dem seit dem letzten Ölwechsel geleisteten Teil des Ölwechselintervalls, eine Rechnereinheit zum Speichern von Verschlechterungsfaktoren und einer Kenngröße, Bewerten der Öltemperatur und des Kraftstoffverbrauchs in Abhängigkeit von ihrem Wert mit jeweils einem Verschlechterungsfaktor, Ermitteln des Verschlechterungsgrads des Öls aus den Verschlechterungsfaktoren, Bilden des mittleren Verschlechterungsgrads des Öls aus den ermittelten Verschlechterungsgraden, Errechnen des individuellen Ölwechselintervalls aus der Kenngröße und dem mittleren Verschlechterungsgrad des Öls und Bestimmen des verbleibenden Teils des Ölwechselintervalls aus dem errechneten individuellen Ölwechselintervall und dem geleistetem Teil des Ölwechselintervalls, und eine Ausgabeeinheit zum Anzeigen des verbleibenden Teils des Ölwechselintervalls. Der besondere Vorteil dieser Vorrichtung ist, daß die Wertepaare sowie der seit dem letzten Ölwechsel geleistete Teil des Ölwechselintervalls von Einrichtungen bereitgestellt werden, die bei Brennkraftmaschinen serienmäßig vorhanden sind. Folglich sind bei Brennkraftmaschinen keine aufwendigen Einrichtungen zur Erfassung der Ausgangsgrößen erforderlich. Lediglich ein Zeitgeber, eine Rechnereinheit und eine Ausgabeeinheit sind zusätzlich vorzusehen, wobei der Zeitgeber und die Rechnereinheit kostengünstige Bauteile sind und die Ausgabeeinheit gegebenenfalls in ein bereits vorhandenes Anzeigenfeld der Brennkraftmaschine integriert werden kann.

Da die Ausgabeeinheit den verbleibenden Teil des Ölwechselintervalls anzeigt, kann der anstehende Ölwechsel schon frühzeitig vom Betreiber der Brennkraftmaschine eingeplant werden.

Besonders bevorzugt ist für die Erfassung der Wertepaare ein Zeitgeber vorgesehen. Dieser Zeitgeber kann so geschaltet sein, daß er auch dann arbeitet, wenn die Brennkraftmaschine außer Betrieb ist, und somit fortwährend Wertepaare erfaßt werden. Alternativ kann der Zeitgeber aber auch so geschaltet sein, daß er nur während der Betriebsdauer der Brennkraftmaschine arbeitet und somit nur während dieser Zeit Wertepaare erfaßt werden.

Vorteilhaft wird die Anzeige der Ausgabeeinheit in zeitlichen Abständen von 2 Stunden, oder nach Fahrstrecken von 200 Kilometern, aktualisiert. Somit ist gewährleistet, daß die Anzeige sich nicht bei der Erfassung jedes neuen Wertepaares verändert, was gegebenenfalls. die Unlesbarkeit der Anzeige zur Folge hätte.

Die vorliegende Erfindung wird unter Bezugnahme auf die nachfolgenden Figuren näher erläutert. Es zeigen:
- Figur 1: ein Diagramm, das die Beziehung zwischen der Öltemperatur und dem Verschlechterungsfaktor A darstellt;
- Figur 2: ein Diagramm, das die Beziehung zwischen dem Kraftstoffverbrauch und dem Verschlechterungsfaktor B wiedergibt;
- Figur 3: ein Flußdiagramm des vorgeschlagenen Verfahrens; und
- Figur 4: ein Blockdiagramm der vorgeschlagenen Vorrichtung in vereinfachter, schematischer Darstellung.

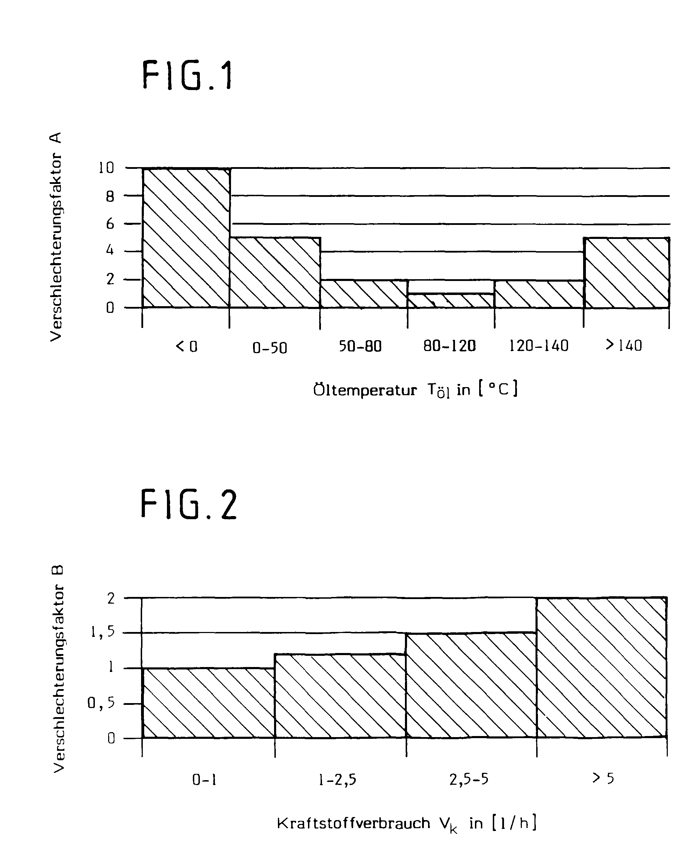

In Figur 1 ist die Beziehung zwischen der Öltemperatur T_{öl} und dem Verschlechterungsfaktor A gezeigt. Es sind insgesamt sechs verschiedene Bereiche der Öltemperatur T_{öl} festgelegt, nämlich < 0°C, 0 bis 50°C, 50 bis 80°C, 80 bis 120°C, 120 bis 140°C und > 140°C. Jedem dieser Temperaturbereiche ist ein Verschlechterungsfaktor A zugeordnet, der Werte zwischen 1 und 10 annimmt. Das Minimum des Verschlechterungsfaktors A liegt beim Temperaturbereich 80 - 120°C. Sowohl mit den höheren Temperaturbereichen als auch mit den tieferen Temperaturbereichen steigt der Verschlechterungsfaktor A an. Das Maximum des Verschlechterungsfaktors A liegt beim Temperaturbereich < 0°C.

In Figur 2 ist dagegen die Beziehung zwischen dem Kraftstoffverbrauch Vₖ pro Zylinder und dem Verschlechterungsfaktor B dargestellt. Dort sind nur 4 verschiedene Bereiche des Kraftstoffverbrauch Vₖ festgelegt, nämlich 0 - 1 Liter pro Stunde, 1 - 2,5 Liter pro Stunde, 2,5 bis 5 Liter pro Stunde und > 5 Liter pro Stunde. Diesen Verbrauchsbereichen ist jeweils ein Verschlechterungsfaktor B zugeordnet, der zwischen 1 und 2 liegt. Der minimale Verschlechterungsfaktor B ist dabei dem Verbrauchsbereich 0 bis 1 Liter pro Stunde und der maximale Verschlechterungsfaktor B dem Verbrauchsbereich > 5 Liter pro Stunde zugeordnet .

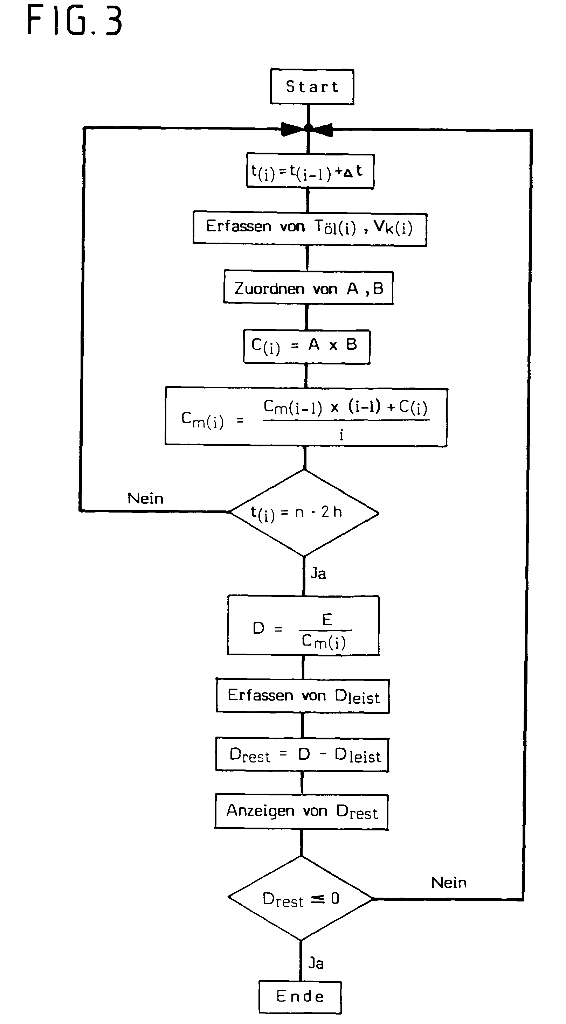

Das in Figur 3 gezeigte Flußdiagramm stellt einen besonders bevorzugten Verfahrensablauf dar. In zeitlichen Abständen von Δt = 1 Sekunde wird jeweils ein aus Öltemperatur T_{öl} und Kraftstoffverbrauch Vₖ bestehendes Wertepaar erfaßt. Dem Wert der Öltemperatur T_{öl} wird gemäß Figur 1 ein Verschlechterungsfaktor A und dem Wert des Kraftstoffverbrauchs Vₖ wird gemäß Figur 2 ein Verschlechterungsfaktor B zugeordnet. Daraufhin werden die beiden Verschlechterungsfaktoren A und B miteinander multipliziert, woraus sich der Verschlechterungsgrad C ergibt. Daraus wird dann der mittlere Verschlechterungsgrad Cₘ errechnet. Die genannten Verfahrensschritte werden so lange wiederholt, bis seit dem Start zwei Stunden oder ein Vielfaches vergangen sind. Ist dies der Fall, so wird eine vorgegebene Kenngröße E durch den mittleren Verschlechterungsgrad Cₘ dividiert, woraus sich das individuelle Ölwechselintervall D ergibt. Danach wird der seit dem letzten Ölwechsel geleistete Teil des Ölwechselintervalls Dₗₑᵢₛₜ erfaßt. Das errechnete individuelle Ölwechselintervall D minus dem geleisteten Teil des Ölwechselintervalls Dₗₑᵢₛₜ ergibt dann den verbleibenden Teil des Ölwechselintervalls Dᵣₑₛₜ. Schließlich wird der verbleibende Teil des Ölwechselintervalls Dᵣₑₛₜ dem Betreiber der Brennkraftmaschine angezeigt. Ist dieser verbleibende Teil des Ölwechselintervalls Dᵣₑₛₜ > 0, so werden die Verfahrensschritte erneut wiederholt. Ist der verbleibende Teil des Ölwechselintervalls Dᵣₑₛₜ dagegen < 0, so endet der Verfahrensablauf. Abschließend könnte dann noch eine akustische Warnmeldung ausgegeben werden.

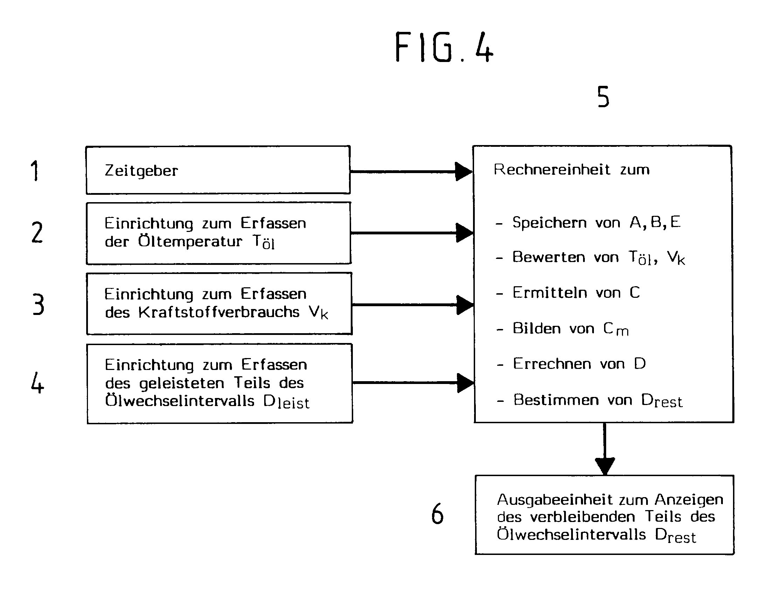

Figur 4 zeigt schließlich ein Blockdiagramm der zur Durchführung des Verfahrens vorgeschlagenen Vorrichtung. Diese Vorrichtung umfaßt einen Zeitgeber 1, der mit Zeitintervallen von 1 Sekunde arbeitet, eine erste Einrichtung 2 zum Erfassen der Öltemperatur T_{öl}, eine zweite Einrichtung 3 zum Erfassen des Kraftstoffverbrauchs Vₖ, eine dritte Einrichtung 4 zum Erfassen des geleisteten Teils des Ölwechselintervalls Dₗₑᵢₛₜ, eine Rechnereinheit 5 zur Bestimmung des verbleibenden Teils des Ölwechselintervalls Dᵣₑₛₜ und eine Ausgabeeinheit 6 zum Anzeigen des verbleibenden Teils des Ölwechselintervalls Dᵣₑₛₜ.

## Patentansprüche

1. Verfahren zur Bestimmung und Anzeige des verbleibenden Teils eines Ölwechselintervalls (Dᵣₑₛₜ) einer Brennkraftmaschine darin bestehend,
- daß Öltemperatur (T_{öl}) und Kraftstoffverbrauch (Vₖ) der Brennkraftmaschine als Wertepaare erfaßt werden,
- daß den Wertepaaren vorgegebene Verschlechterungsfaktoren (A, B) zugeordnet werden,
- daß aus den Verschlechterungsfaktoren (A, B) der jeweilige Verschlechterungsgrad (C) des Öls ermittelt wird,
- daß aus den ermittelten Verschlechterungsgraden (C) der mittlere Verschlechterungsgrad (Cₘ) gebildet wird,
- daß das individuelle Ölwechselintervall (D) aus einer vorgegebenen Kenngröße (E) und dem mittleren Verschlechterungsgrad (Cₘ) des Öls errechnet wird,
- daß der seit dem letzten Ölwechsel geleistete Teil des Ölwechselintervalls (Dₗₑᵢₛₜ) erfaßt wird, und
- daß der verbleibende Teil des Ölwechselintervalls (Dᵣₑₛₜ) aus dem individuellen Ölwechselintervall (D) und dem geleisteten Teil des Ölwechselintervalls (Dₗₑᵢₛₜ) bestimmt und angezeigt wird.

2. Verfahren nach Anspruch 1, dadurch gekennzeichnet, daß die Wertepaare in zeitlichen Abständen (Δt) von 1 - 3.5 Sekunden erfaßt werden.

3. Verfahren nach einem der Ansprüche 1 oder 2, dadurch gekennzeichnet, daß die Werte der Öltemperatur (Töl) in verschiedene Bereiche unterteilt werden, denen jeweils ein bestimmter Verschlechterungsfaktor (A), der zwischen 1 und 10 liegt, zugeordnet wird.

4. Verfahren nach einem der Ansprüche 1 bis 3, dadurch gekennzeichnet, daß der Kraftstoffverbrauch (Vₖ) pro Zylinder der Brennkraftmaschine erfaßt wird.

5. Verfahren nach einem der Ansprüche 1 bis 4, dadurch gekennzeichnet, daß die Werte des Kraftstoffverbrauchs (Vₖ) in verschiedene Bereiche unterteilt werden, denen jeweils ein bestimmter Verschlechterungsfaktor (B), der zwischen 1 und 2 liegt, zugeordnet wird.

6. Verfahren nach einem der Ansprüche 1 bis 5, dadurch gekennzeichnet, daß das individuelle Ölwechselintervall (D) als Quotient aus der Kenngröße (E) und dem mittleren Verschlechterungsgrad (Cₘ) des Öls errechnet wird.

7. Verfahren nach einem der Ansprüche 1 bis 6, dadurch gekennzeichnet, daß die Kenngröße (E), das individuelle Ölwechselintervall (D), der geleistete Teil des Ölwechselintervalls (Dₗₑᵢₛₜ) und der verbleibende Teil des Ölwechselintervalls (Dᵣₑₛₜ) in Zeiteinheiten angegeben werden.

8. Verfahren nach einem der Ansprüche 1 bis 6, dadurch gekennzeichnet, daß die Kenngröße (E), das individuelle Ölwechselintervall (D) der geleistete Teil des Ölwechselintervalls (Dₗₑᵢₛₜ) und der verbleibende Teil des Ölwechselintervalls (Dᵣₑₛₜ) in Wegeinheiten angegeben werden.

9. Vorrichtung zur Bestimmung und Anzeige des verbleibenden Teils eines Ölwechselintervalls (Dᵣₑₛₜ) einer Brennkraftmaschine, mit
- Einrichtungen (2, 3, 4) zum Erfassen von Öltemperatur (T_{öl}) und Kraftstoffverbrauch (Vₖ) als Wertepaare sowie dem seit dem letzten Ölwechsel geleisteten Teil des Ölwechselintervalls (Dₗₑᵢₛₜ),
- einer Rechnereinheit (5) mit Mittel zum
- Speichern von Verschlechterungsfaktoren (A, B) und einer Kenngröße (E),
- Bewerten der Öltemperatur (T_{öl}) und des Kraftstoffverbrauchs (Vₖ) in Abhängigkeit von ihrem Wert mit jeweils einem Verschlechterungsfaktor (A bzw. B),
- Ermitteln des Verschlechterungsgrads (C) des Öls aus den Verschlechterungsfaktoren (A, B),
- Bilden des mittleren Verschlechterungsgrads (Cₘ) des Öls aus den ermittelten Verschlechterungsgraden (C),
- Errechnen des individuellen Ölwechselintervalls (D) aus der Kenngröße (E) und dem mittleren Verschlechterungsgrad (Cₘ) des Öls, und
- Bestimmen des verbleibenden Teils des Ölwechselintervalls (Dᵣₑₛₜ) aus dem individuellen Ölwechselintervall (D) und dem geleisteten Teil des Ölwechselintervalls (Dₗₑᵢₛₜ), und
- einer Ausgabeeinheit (6) zum Anzeigen des verbleibenden Teils des Ölwechselintervalls (Dᵣₑₛₜ).

10. Vorrichtung nach Anspruch 9, dadurch gekennzeichnet, daß zum Erfassen der Wertepaare und des geleisteten Teils des Ölwechselintervalls (Dₗₑᵢₛₜ) ein Zeitgeber (1) vorgesehen ist.

11. Vorrichtung nach Anspruch 9 oder 10, dadurch gekennzeichnet, daß die Anzeige der Ausgabeeinheit (6) in zeitlichen Abständen von 2 Stunden aktualisiert wird.

12. Vorrichtung nach Anspruch 9 oder 10, dadurch gekennzeichnet, daß die Anzeige der Ausgabeeinheit (6) nach einer Fahrstrecke von 200 Kilometern aktualisiert wird.

## Claims

1. A method of determining and displaying the remaining part of an oil change interval (Dᵣₑₘₐᵢₙ) of an internal combustion engine, consisting of,
- determining the oil temperature (Tₒᵢₗ) and fuel consumption (Vₖ) of the internal combustion engine as pairs of variates,
- assigning predetermined deterioration factors (A, B) to the pairs of variates,
- determining the respective degree of deterioration (C) of the oil from the deterioration factors (A, B),
- forming the mean degree of deterioration (Cₘ) from the determined degrees of deterioration (C),
- calculating the particular oil change interval (D) from a predetermined parameter (E) and from the mean degree of deterioration (Cₘ) of the oil,
- determining the part of the oil change interval (D_{accomp}) which has been accomplished since the last oil change, and
- determining and displaying the remaining part of the oil change interval (Dᵣₑₘₐᵢₙ) from the particular oil change interval (D) and from the accomplished part of the oil change interval (D_{accomp}).

2. A method according to claim 1, characterised in that the pairs of variates are determined at chronological intervals (Δt) of 1 - 3.5 seconds.

3. A method according to either one of claims 1 or 2, characterised in that the values of the oil temperature (Tₒᵢₗ) are subdivided into different ranges, to each of which a given deterioration factor (A) is assigned which falls between 1 and 10.

4. A method according to any one of claims 1 to 3, characterised in that the fuel consumption (Vₖ) of each cylinder of the internal combustion engine is determined.

5. A method according to any one of claims 1 to 4, characterised in that the values of the fuel consumption (Vₖ) are subdivided into different ranges, to each of which a given deterioration factor (B) is assigned which falls between 1 and 2.

6. A method according to any one of claims 1 to 5, characterised in that the particular oil change interval (D) is calculated as the quotient formed by the parameter (E) divided by the mean degree of deterioration (Cₘ) of the oil.

7. A method according to any one of claims 1 to 6, characterised in that the parameter (E), the particular oil change interval (D), the accomplished part of the oil change interval (D_{accomp}) and the remaining part of the oil change interval (Dᵣₑₘₐᵢₙ) are given in units of time.

8. A method according to any one of claims 1 to 6, characterised in that the parameter (E), the particular oil change interval (D), the accomplished part of the oil change interval (D_{accomp}) and the remaining part of the oil change interval (Dᵣₑₘₐᵢₙ) are given in units of distance.

9. An apparatus for determining and displaying the remaining part of an oil change interval (Dᵣₑₘₐᵢₙ) of an internal combustion engine, comprising
- devices (2, 3, 4) for determining the oil temperature (Tₒᵢₗ) and fuel consumption (Vₖ) as pairs of variates, and for determining the part of the oil change interval (D_{accomp}) which has been accomplished since the last oil change,
- a computer unit (5), comprising means for
- storing deterioration factors (A, B) and a parameter (E),
- evaluating the oil temperature (Tₒᵢₗ) and the fuel consumption (Vₖ), depending on the value thereof, by means of a deterioration factor (A and B, respectively) in each case,
- determining the degree of deterioration (C) of the oil from the deterioration factors (A, B),
- forming the mean degree of deterioration (Cₘ) of the oil from the determined degrees of deterioration (C),
- calculating the particular oil change interval (D) from the parameter (E) and from the mean degree of deterioration (Cₘ) of the oil, and
- determining the remaining part of the oil change interval (Dᵣₑₘₐᵢₙ) from the particular oil change interval (D) and from the accomplished part of the oil change interval (D_{accomp}), and
- comprising an output unit (6) for displaying the remaining part of the oil change interval (Dᵣₑₘₐᵢₙ).

10. An apparatus according to claim 9, characterised in that a timing unit (1) is provided for determining the pairs of variates and the accomplished part of the oil change interval (D_{accomp}).

11. An apparatus according to claims 9 or 10, characterised in that the display of the output unit (6) is updated at chronological intervals of 2 hours.

12. An apparatus according to claims 9 or 10, characterised in that the display of the output unit (6) is updated after a distance of 200 kilometers has been covered.

## Revendications

1. Procédé pour la détermination et l'affichage de la partie restante d'un intervalle de changement d'huile (Dᵣₑₛₜ) d'un moteur à combustion interne, consistant en :
- en ce qu'on appréhende la température d'huile (Tₕᵤᵢₗₑ) et la consommation en carburant (Vₖ) du moteur à combustion interne, sous la forme de paires de valeurs,
- en ce qu'on associe des facteurs de dégradation (A, B) prédéterminés aux paires de valeurs,
- en ce qu'on détermine le degré de dégradation (C) respectif de l'huile à partir des facteurs de dégradation (A, B),
- en ce qu'on forme le degré de dégradation moyen (Cₘ) à partir des degrés de dégradation (C) ayant été déterminés,
- en ce qu'on calcule l'intervalle de changement d'huile (D) individuel à partir d'une grandeur caractéristique (E) prédéterminée et du degré de dégradation moyen (Cₘ) de l'huile,
- en ce qu'on appréhende la partie de l'intervalle de changement d'huile (D_{écoulé}) écoulée depuis le dernier changement d'huile, et
- en ce qu'on détermine et on affiche la partie restante de l'intervalle de changement d'huile (Dᵣₑₛₜ), à partir de l'intervalle de changement d'huile individuel (D) et de la partie écoulée de l'intervalle de changement d'huile (D_{écoulé}).

2. Procédé selon la revendication 1, caractérisé en ce que les paires de valeurs sont appréhendées à des intervalles de temps (Δt) de 1 - 3,5 secondes.

3. Procédé selon l'une des revendications 1 ou 2, caractérisé en ce que les valeurs de la température d'huile (Tₕᵤᵢₗₑ) sont subdivisées en différentes plages à chacune desquelles est associé un facteur de dégradation (A) déterminé, compris entre 1 et 10.

4. Procédé selon l'une des revendications 1 à 3, caractérisé en ce que la consommation en carburant (Vₖ) par cylindre du moteur à combustion interne est appréhendée.

5. Procédé selon l'une des revendications 1 à 4, caractérisé en ce que les valeurs de la consommation en carburant (Vₖ) sont subdivisées en différentes plages à chacune desquelles est associé un facteur de dégradation (B) déterminé, compris entre 1 et 2.

6. Procédé selon l'une des revendications 1 à 5, caractérisé en ce que l'intervalle de changement d'huile (D) individuel est calculé sous la forme du quotient entre la grandeur caractéristique (E) et le degré de dégradation moyen (Cₘ) de l'huile.

7. Procédé selon l'une des revendications 1 à 6, caractérisé en ce que la grandeur caractéristique (E), l'intervalle de changement d'huile individuel (D), la partie écoulée de l'intervalle de changement d'huile (D_{écoulé}) et la partie restante de l'intervalle de changement d'huile (Dᵣₑₛₜ) sont indiqués, exprimés en unités de temps.

8. Procédé selon l'une des revendications 1 à 6, caractérisé en ce que la grandeur caractéristique (E), l'intervalle de changement d'huile individuel (D) de la partie écoulée de l'intervalle de changement d'huile (Découlé) et la partie restante d'intervalle de changement d'huile (Dᵣₑₛₜ) sont indiqués, exprimés en unités de distance parcourue.

9. Dispositif pour déterminer et afficher la partie restante d'un intervalle de changement d'huile (Dᵣₑₛₜ) d'un moteur à combustion interne, comportant
- des dispositifs (2, 3, 4) pour appréhender la température d'huile (Tₕᵤᵢₗₑ) et la consommation en carburant (Vₖ), sous la forme de paires de valeurs ainsi que la partie, écoulée depuis le dernier changement d'huile, de l'intervalle de changement d'huile (D_{écoulé}),
- une unité de calcul (5), équipée de moyens pour
- mémoriser des facteurs de dégradation (A, B) et une grandeur caractéristique (E),
- évaluer la température d'huile (Tₕᵤᵢₗₑ) et la consommation de carburant (Vₖ), en fonction de leur valeur, avec chaque fois un facteur de dégradation (A ou B),
- déterminer le degré de dégradation (C) de l'huile à partir des facteurs de dégradation (A, B),
- former le degré de dégradation moyen (Cₘ) à partir des degrés de dégradation (C) déterminés,
- calculer l'intervalle de changement d'huile individuel (D) à partir de la grandeur caractéristique (E) et du degré de dégradation moyen (Cₘ) de l'huile, et
- déterminer la partie restante de l'intervalle de changement d'huile (Dᵣₑₛₜ) à partir de l'intervalle de changement d'huile (D) individuel et de la partie écoulée de l'intervalle de changement d'huile (D_{écoulé}) et,
- une unité de sortie (6) pour afficher la partie restante de l'intervalle de changement d'huile (Dᵣₑₛₜ).

10. Dispositif selon la revendication 9, caractérisé en ce qu'un capteur de temps (1) est prévu pour appréhender les paires de valeurs et la partie écoulée de l'intervalle de changement d'huile (D_{écoulé}).

11. Dispositif selon la revendication 9 ou 10, caractérisé en ce que l'affichage produit par l'unité de sortie (6) est actualisé à des intervalles de temps de 2 heures.

12. Dispositif selon la revendication 9 ou 10, caractérisé en ce que l'affichage de l'unité de sortie (6) est actualisé après avoir parcouru une distance de 200 kilomètres.
